# EUROPEAN PATENT APPLICATION

(11) **EP 3 788 915 A1**
(43) Date of publication of application: **10.03.2021**
(21) Application number: 19195496.5
(22) Date of filing: 05.09.2019
(51) Int. Cl.: A47C 23/00

(54) **THERMOPLASTIC SPRING**

(71) Applicant: SERDAR PLASTIK SANAYI VE TICARET A.S., 06935 Ahi Evran Osb/Sincan/Ankara (TR)
(72) Inventor: TÜTEK, Serdar, 06935 Ahi Evran Osb/Sincan/Ankara (TR)
(74) Representative: Weickmann & Weickmann PartmbB

(57) **Abstract**

The present invention relates to a thermoplastic spring, comprising a lower spring base portion (1) and an upper spring base portion (2), a female spring die (3) and a male spring die (4), wherein the female spring die (3) and the male spring die (4) are located between the lower spring base portion (1) and the upper spring base portion (2), wherein a pin is located on the male spring die (4) and a hole is located on the female spring die (3), wherein an installation process of the thermoplastic spring is performed by placing the placing the pin through the hole.

## Description

The present invention is a thermoplastic lightweight spring that can be used in beds, couches, armchairs and suchlike furniture, that is designed to provide healthy conditions an ergonomically correct position to user's body, that has different hardness scales, that does not make any noise, that is manufactured from stainless thermoplastic material, that can be installed much easier contrary to springs known in the state of the art, that prevents spring deformation which occurs in the progress of time due to usage, that is improved in durability compared to springs manufactured from various metals, that does not perforate the mattress in time contrary to metal springs and that gets aerated by means of its design.

### Technical Field of the Invention

The present invention relates to springs that are used in sectors where beds, couches, armchairs and suchlike furniture are manufactured and that is produced in order to provide comfort to the user.

### State of the Art

Springs that are known in the state of the art are generally manufactured from metal materials and become deformed after a certain period of usage which concordantly results in for respective goods to lose their definitive characteristics and causes them to make discomforting noises. Furthermore, they pose risks for human health due to corrosion. Moreover, since hardness scales are identical in every point of respective products, they cannot provide full comfort to user's body in terms of ergonomics.

### Brief Description of the Invention

The present invention is a thermoplastic lightweight spring that can be used in beds, couches, armchairs and suchlike furniture, that is designed to provide healthy conditions an ergonomically correct position to user's body, that has different hardness scales, that does not make any noise, that is manufactured from stainless thermoplastic material, that can be installed much easier contrary to springs known in the state of the art, that prevents spring deformation which occurs in the progress of time due to usage, that is improved in durability compared to springs manufactured from various metals, that does not perforate the mattress in time contrary to metal springs and that gets aerated by means of its design. The present invention is characterized by facilitating the installation process and rendering faulty installations impossible by means of tie pieces positioned on both lower and upper base portions.

### Detailed Description of the Invention

The present invention is a thermoplastic lightweight spring that can be used in beds, couches, armchairs and suchlike furniture, that is designed to provide healthy conditions an ergonomically correct position to user's body, that has different hardness scales, that does not make any noise, that is manufactured from stainless thermoplastic material, that can be installed much easier contrary to springs known in the state of the art, that prevents spring deformation which occurs in the progress of time due to usage, that is improved in durability compared to springs manufactured from various metals, that does not perforate the mattress in time contrary to metal springs and that gets aerated by means of its design.

The inventive spring that comprises of a female and a male part having butterfly shape which are positioned between the lower and the upper base portions has three different hardness scales and is of a structure that can be grouped by engaging female and male dies.

The entirety of the inventive spring is manufactured from thermoplastic material. Since the inventive spring is manufactured to have different hardness scales, it can be produced to provide desired hardness and softness scales in desired areas of respective products. The inventive spring reduces the pressure in the body to a minimum by means of its structure that has different hardness scales and provides comfort to the user. In comparison with springs that are used in the state of the art, the inventive spring comprises special tie pieces that are positioned on the body and that facilitate the installation process. Therefore, the inventive product provides a spring that can be used instead of springs that are known in bed and furniture sectors and that is characterized by facilitating the installation process and rendering faulty installations impossible by means of tie pieces positioned on base portions for the purposes of eliminating installation difficulties and preventing faulty installations.
1-Lower Plastic Spring Base Portion
2-Upper Plastic Spring Base Portion
3-Female Plastic Spring Die
4-Male Plastic Spring Die

The present application may in particular refer to the following items:
1. Thermoplastic spring wherein said spring that is located on lower plastic spring base portion (1) and upper plastic spring base portion (2) and that allows a much easier installation compared to known springs thereby preventing faulty installations is formed after installation process is performed by means of placing pin located on male thermoplastic spring die (4) through the hole located on female plastic spring die (3).
2. Thermoplastic spring according to item 1 wherein by comprising tie pieces that eliminate installation difficulties encountered in available springs and that prevent faulty installations.
3. Thermoplastic spring according to item 1 wherein it consists of a female and a male parts of butterfly shape that engage between lower and upper base portions.
4. Thermoplastic spring according to item 1 wherein it is manufactured from thermoplastic, stainless raw material that does not make any noise.
5. Thermoplastic spring according to item 1 characterized in that, it can be manufactured to be used in desired hardness and softness scales in desired areas of respective products by means of its structure having three different hardness scales.
6. Thermoplastic spring according to item 1, comprising a structure that reduces the pressure in the body to a minimum and that provides comfort to the user by means of its structure having three different hardness scales.
7. Thermoplastic spring according to item 1 wherein it provides a healthy product for its user by means of its porous structure that allows aeration.
8. Thermoplastic spring according to item 1 characterized in that it is a spring that prevents spring deformation occurring in the progress of time due to usage that has increased durability compared to metal springs and that is much lighter than metal springs.

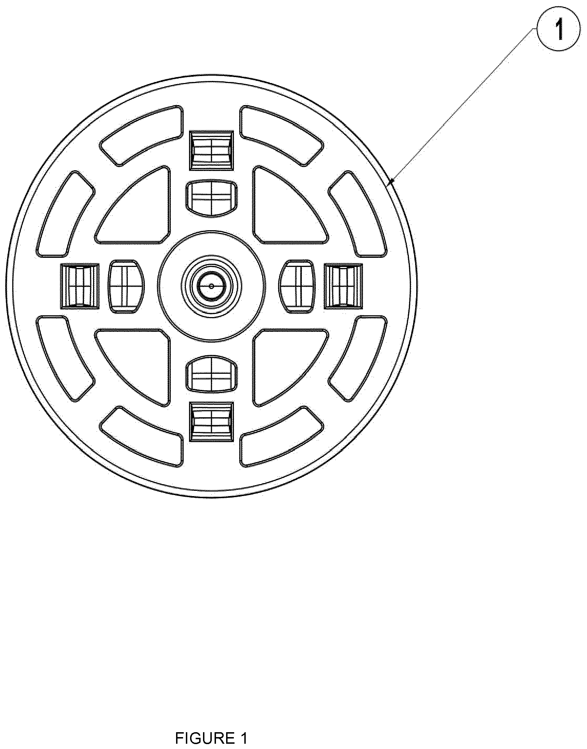

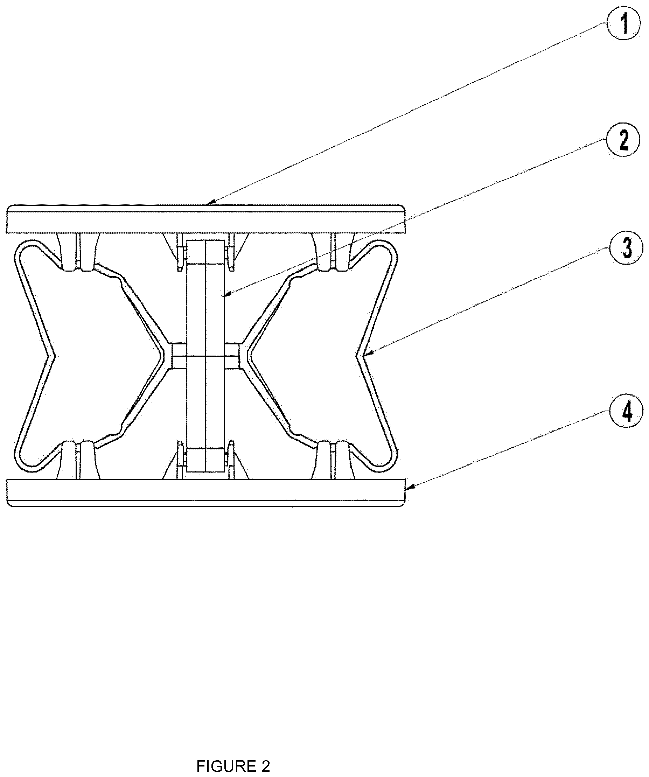

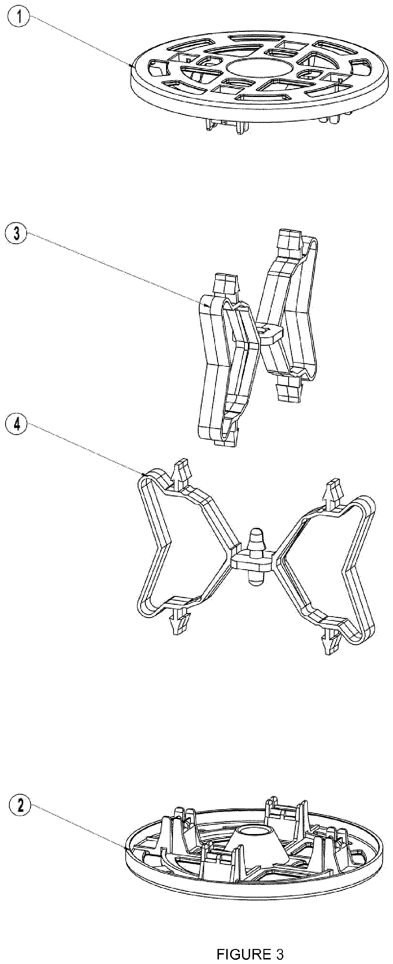

## Claims

1. Thermoplastic spring, comprising:
- a lower spring base portion (1) and an upper spring base portion (2),
- a female spring die (3) and a male spring die (4);
wherein the female spring die (3) and the male spring die (4) are located between the lower spring base portion (1) and the upper spring base portion (2),
wherein a pin is located on the male spring die (4) and a hole is located on the female spring die (3),
wherein an installation process of the thermoplastic spring is performed by placing the placing the pin through the hole.

2. Thermoplastic spring according to claim 1, wherein tie pieces are positioned on both the lower spring base (1) portion and the upper spring base portion (2) for facilitating the installation process.

3. Thermoplastic spring according to any of the preceding claims, wherein the female spring die (3) and the male spring die (4) are both of a butterfly shape and engaged between the lower (1) und upper (2) spring base portions.

4. Thermoplastic spring according to any of the preceding claims, manufactured from thermoplastic, stainless, low-noise material.

5. Thermoplastic spring according to any of the preceding claims, comprising three different hardness scales.

6. Thermoplastic spring according to any of the preceding claims, comprising a porous structure.
